(19) Europäisches Patentamt / European Patent Office / Office européen des brevets

(11) **EP 4 614 327 A1**

(12) **EUROPEAN PATENT APPLICATION**
published in accordance with Art. 153(4) EPC

(43) Date of publication:
**10.09.2025 Bulletin 2025/37**

(21) Application number: **23935092.9**

(22) Date of filing: **01.12.2023**

(51) International Patent Classification (IPC):
**G06F 9/54** (2006.01)   **G06F 9/50** (2006.01)
**G06N 3/098** (2023.01)   **G06N 3/0985** (2023.01)

(86) International application number:
**PCT/CN2023/135891**

(87) International publication number:
**WO 2024/221925 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2023   CN 202310492698**

(71) Applicant: **Tencent Technology (Shenzhen) Company Limited**
**Shenzhen, Guangdong 518057 (CN)**

(72) Inventor: **GONG, Jing**
**Shenzhen, Guangdong 518057 (CN)**

(74) Representative: **Gunzelmann, Rainer et al**
**Wuesthoff & Wuesthoff**
**Patentanwälte und Rechtsanwalt PartG mbB**
**Schweigerstraße 2**
**81541 München (DE)**

(54) **DATA PROCESSING METHOD AND APPARATUS, AND ELECTRONIC DEVICE, COMPUTER-READABLE STORAGE MEDIUM AND COMPUTER PROGRAM PRODUCT**

(57)    Provided in the present application are an artificial-intelligence-based data processing method and apparatus, and an electronic device, a computer-readable storage medium and a computer program product. The data processing method is applied to a first graphics processing unit. The first graphics processing unit stores embedding features of full-scale sparse features of a first type, and a second graphics processing unit stores embedding features of full-scale sparse features of a second type, wherein the first type is different from the second type. The method comprises: a first graphics processing unit acquiring sparse features of a target sample, wherein the sparse features of the target sample include first sparse features of a first type and second sparse features of a second type; the first graphics processing unit acquiring, from among embedding features of full-scale sparse features of the first type, embedding features corresponding to the first sparse features; the first graphics processing unit acquiring, from a second graphics processing unit, embedding features that correspond to the second sparse features and are obtained by querying embedding features of full-scale sparse features of the second type; the first graphics processing unit combining the embedding features corresponding to the first sparse features and the embedding features corresponding to the second sparse features, so as to form embedding features corresponding to the sparse features of the target sample; and the first graphics processing unit executing probability mapping processing on the embedding features corresponding to the sparse features of the target sample, and generating an update instruction according to a probability mapping result, wherein the update instruction is used for instructing the second graphics processing unit to update the embedding features of the full-scale sparse features of the second type.

FIG. 3A

## Description

RELATED APPLICATION

This application is based upon and claims priority to Chinese Patent Application No. 202310492698.2, filed on April 28, 2023.

FIELD OF THE TECHNOLOGY

The present disclosure relates to the technical field of artificial intelligence (AI), and in particular, to a data processing method and apparatus, an electronic device, a computer-readable storage medium, and a computer program product.

BACKGROUND OF THE DISCLOSURE

AI is a comprehensive technology of computer science. It involves the study of the design principles and implementation methods of various intelligent machines to enable the machines to have the functions of perception, reasoning, and decision-making. Analysis based on medical images and medical texts is one of important applications in the field of AI. A medical analysis system refers to a system that processes, analyzes, and understands medical images and medical texts using a computer to identify targets and objects in different modes.

In the related art, embedding features are learned based on a parameter server manner. Generally, embedding representations of the sparse features are stored in a central processing unit (CPU), and therefore embedding training is also completed in the CPU. However, due to the large scale of the embedding operation, the training speed is relatively slow.

SUMMARY

Embodiments of the present disclosure provide an AI-based data processing method and apparatus, an electronic device, a computer-readable storage medium, and a computer program product, which can improve an update processing speed through a graphics processing unit (GPU) while realizing large-scale embedding storage.

Technical solutions of the embodiments of the present disclosure are implemented as follows.

The embodiments of the present disclosure provide an AI-based data processing method, applied to a first GPU. The first GPU stores embedding features of full sparse features of a first type, a second GPU stores embedding features of full sparse features of a second type, and the first type is different from the second type. The method includes the following operations:

acquiring, by the first GPU, a sparse feature of a target sample, the sparse feature of the target sample containing a first sparse feature of the first type and a second sparse feature of the second type;

acquiring, by the first GPU, an embedding feature corresponding to the first sparse feature from the embedding features of the full sparse features of the first type;

acquiring, by the first GPU, an embedding feature that correspond to the second sparse feature from the embedding features of the full sparse features of the second type from the second GPU;

generating, by the first GPU, an embedding feature corresponding to the sparse feature of the target sample using the embedding feature corresponding to the first sparse feature and the embedding feature corresponding to the second sparse feature; and

performing, by the first GPU, probability mapping on the embedding feature corresponding to the sparse feature of the target sample, and generating an update instruction according to a probability mapping result, the update instruction being configured for instructing the second GPU to update the embedding features of the full sparse features of the second type.

The embodiments of the present disclosure provide an AI-based data processing apparatus, applied to a first GPU. The first GPU stores embedding features of full sparse features of a first type, a second GPU stores embedding features of full sparse features of a second type, and the first type is different from the second type. The apparatus includes:

a first receiving module configured to acquire a sparse feature of a target sample, the sparse feature of the target sample containing a first sparse feature of the first type and a second sparse feature of the second type;

a first acquisition module configured to acquire an embedding feature that correspond to the second sparse feature from the embedding features of the full sparse features of the second type from the second GPU;

a first returning module configured to acquire an embedding feature that correspond to the second sparse feature from the embedding features of the full sparse features of the second type from the second GPU;

a first determining module configured to generate an embedding feature corresponding to the sparse feature of the target sample using the embedding feature corresponding to the first sparse feature and the embedding feature corresponding to the second sparse features; and

a first update module configured to perform probability mapping on the embedding feature corresponding to the sparse feature of the target sample, and generate an update instruction according to a probability mapping result, the update instruction being configured for instructing the second GPU to update the embedding features of the full sparse features of the second type.

The embodiments of the present disclosure provide a data processing method, applied to a second GPU. A first GPU stores embedding features of full sparse features of a first type, the second GPU stores embedding features of full sparse features of a second type, and the first type is different from the second type.
The method includes the following operations:

receiving, by the second GPU, a second sparse feature of the second type transmitted by the first GPU;

searching, by the second GPU, the embedding features of the full sparse features of the second type for an embedding feature corresponding to the second sparse feature;

transmitting, by the second GPU, the embedding feature corresponding to the second sparse feature to the first GPU so that the first GPU performs probability mapping on an embedding feature corresponding to a first sparse feature of the first type and the embedding feature corresponding to the second sparse feature, the embedding feature corresponding to the first sparse features being acquired by the first GPU from the embedding features of the full sparse features of the first type; and

receiving, by the second GPU, an update instruction generated according to a probability mapping result from the first GPU, and updating the embedding features of the full sparse features of the second type based on the update instruction.

The embodiments of the present disclosure provide a data processing apparatus, applied to a second GPU. A first GPU stores embedding features of full sparse features of a first type, the second GPU stores embedding features of full sparse features of a second type, and the first type is different from the second type.
The apparatus includes:

a second receiving module configured to receive a second sparse feature of the second type transmitted by the first GPU;

a search module configured to search the embedding features of the full sparse features of the second type for an embedding feature corresponding to the second sparse feature;

a second returning module configured to transmit the embedding feature corresponding to the second sparse feature to the first GPU so that the first GPU performs probability mapping on an embedding feature corresponding to first sparse feature of the first type and the embedding feature corresponding to the second sparse feature, the embedding feature corresponding to the first sparse feature being acquired by the first GPU from the embedding features of the full sparse features of the first type; and

a second update module configured to receive an update instruction generated according to a probability mapping result from the first GPU, and update the embedding features of the full sparse features of the second type based on the update instruction.

The embodiments of the present disclosure provide a GPU, configured to perform the data processing method provided in the embodiments of the present disclosure.
The embodiments of the present disclosure provide an electronic device, including:

a memory configured to store a computer-executable instruction; and

a GPU configured to implement the data processing method provided in the embodiments of the present disclosure when executing the computer-executable instruction stored in the memory.

The embodiments of the present disclosure provide a computer-readable storage medium, having a computer-executable instruction stored therein, and the computer-executable instruction, when executed by a processor, implementing the data processing method provided in the embodiments of the present disclosure. The processor is a CPU or a GPU.
The embodiments of the present disclosure provide a computer program product, including a computer-executable instruction, and the computer-executable instruction, when executed by a processor, implementing the data processing method provided in the embodiments of the present disclosure. The processor is a CPU or a GPU.
The embodiments of the present disclosure have the following beneficial effects.
The embedding features are stored in different GPUs according to types so that distributed storage of the embeddings may be implemented. The first GPU acquires different types of sparse features of the target sample. The first GPU locally acquires the embedding features of the first type and acquires the embedding features of the second type from the second GPU. The first GPU performs classification according to types to conveniently acquire the embedding features from corresponding GPUs, which may improve the acquisition efficiency and facilitate feature management. The first GPU performs probability mapping on the two types of embedding features and transmits the update instruction to the second GPU according to the probability mapping result. The update instruction is configured for instructing the second GPU to update the embedding features of the second type, thereby updating the embedding features on the premise of distributed storage, fully using the computation efficiency of the GPU, and greatly improving an embedding update speed while satisfying storage requirements.

BRIEF DESCRIPTION OF THE DRAWINGS

FIG. 1A is a schematic structural diagram of an AI-based data processing system according to an embodiment of the present disclosure.

FIG. 1B is an architecture diagram of a data processing system according to an embodiment of the present disclosure.

FIG. 2 is a schematic structural diagram of an electronic device according to an embodiment of the present disclosure.

FIG. 3A to FIG. 3D are schematic flowcharts of an AI-based data processing method according to an embodiment of the present disclosure.

FIG. 4 is a schematic diagram of a framework of a recommendation system according to an embodiment of the present disclosure.

FIG. 5 is a schematic diagram of a physical architecture of a parameter server according to an embodiment of the present disclosure.

FIG. 6 is a schematic diagram of a single worker node according to an embodiment of the present disclosure.

FIG. 7 is a schematic diagram of data flow of an AI-based data processing method according to an embodiment of the present disclosure.

FIG. 8 is a schematic diagram of data flow of an AI-based data processing method according to an embodiment of the present disclosure.

DESCRIPTION OF EMBODIMENTS

To make the objectives, technical solutions, and advantages of the present disclosure clearer, the present disclosure will be described in further detail below with reference to the accompanying drawings. The described embodiments are not to be considered as a limitation to the present disclosure. All other embodiments obtained by a person skilled in the art without creative efforts shall fall within the protection scope of the present disclosure.

The term, involved in the following description, "some embodiments" describes subsets of all possible embodiments, but "some embodiments" may be the same subset or different subsets of all the possible embodiments and may be combined with each other without conflict. The features defined in the "some embodiments" can be also applied to other embodiments, and can be combined with each other without conflict.

The term, involved in the following description, "first/second/ third" is merely intended to distinguish similar objects rather than describing specific orders. The "first/second/ third" is interchangeable in proper circumstances to enable the embodiments of the present disclosure to be implemented in other orders than those illustrated or described herein.

Unless defined otherwise, all technical and scientific terminologies used herein have the same meaning as commonly understood by a person skilled in the art to which the present disclosure belongs. Terms used herein are merely intended to describe the embodiments of the present disclosure, but are not intended to limit the present disclosure.

Before the embodiments of the present disclosure are further described in detail, nouns and terms involved in the embodiments of the present disclosure are described. The nouns and terms involved in the embodiments of the present disclosure are applicable to the following explanations.

1) Embedding: is a method for representing an object using a numerical vector. The object herein may be a word, an item, a movie, or the like. There are many categorical and ID-type features in a recommendation scene. Extensive use of one-hot encoding may result in extremely sparse sample feature vectors. However, structural characteristics of deep learning are not conducive to processing sparse feature vectors. Therefore, almost all deep learning-based recommendation models employ an embedding layer to transform sparse high-dimensional feature vectors into dense low-dimensional feature vectors, i.e., embedding features which is abbreviated to embeddings hereinafter).

2) TensorFlow: is a symbolic mathematical system based on data flow programming. It is widely applied to programming implementation of various machine learning algorithms, has a multi-layer structure, may be deployed in various servers, personal computer (PC) terminals, and web pages, supports high-performance value computation of a GPU and a tensor processing unit (TPU), and is widely applied to product development and scientific research of various fields.

3) Parameter server: is a programming framework to facilitate compiling of a distributed parallel program, with a focus on supporting distributed storage and coordination of large-scale parameters. Nodes in a cluster of parameter servers may be classified into computing nodes and parameter service nodes. The computing node is responsible for computing and learning training data (block) allocated to the computing node, and updating a corresponding parameter. In a distributed storage manner, the parameter service nodes each store a part of the global parameters, and accept, as a serving party, the parameter query and update request of the computing node.

4) Sparse feature and dense feature: sparse features are those that do not appear continuously in the dataset, with the majority of their values being zero, for example, account identifiers. If there are 100 accounts, for each account identifier, there will be 99 values of zero in sparse features and only 1 value of one. The reason why they are referred to as sparse features is that they have very few non-zero values in the dataset. Full sparse features represent the sparse features of all samples. For example, for an account type, if there are a total of 100 accounts across all samples, then 100 sparse features corresponding to these 100 accounts constitute the full sparse features of the account type. Dense features are generally defined in contrast to the sparse features, where a proportion of zero values in the dense features is relatively low, or there may be no zero values.

5) Type: the type provided in the embodiments of the present disclosure may be a content type or a data format type. The content type is distinguished based on semantics represented by the sparse features, and the data format type is distinguished based on a data format of the sparse features.

In the related art, embeddings are learned based on a parameter server manner. Generally, embedding representations of the sparse features are stored in a CPU, and embedding training is also completed in the CPU. However, due to the large scale of the embedding operation, if the embedding training is completed in the CPU, a training speed will be limited. During the implementation of the embodiments of the present disclosure, the applicant finds that if the embedding training is deployed in a GPU, the training speed may be effectively improved, but a storage capability of the GPU cannot satisfy a storage requirement of large-scale embeddings.
Embodiments of the present disclosure provide an AI-based data processing method and apparatus, an electronic device, and a computer-readable storage medium, which can improve an update processing speed through the GPU while realizing large-scale embedding storage.
The data processing method provided in the embodiments of the present disclosure may be implemented by a terminal/server alone. Alternatively, the data processing method may be implemented by a terminal and a server together. For example, the terminal or the server independently performs the data processing method described below. Alternatively, the terminal transmits a data sample to the server, and the server performs the data processing method according to the received data sample.
The electronic device for data processing provided in the embodiments of the present disclosure may be various types of terminals or servers. The server may be an independent physical server, a server cluster or a distributed system including a plurality of physical servers, or a cloud server providing a cloud computing service. The terminal may be a smartphone, a tablet computer, a notebook computer, a desktop computer, a smart speaker, a smart watch, an in-vehicle terminal, or the like, but is not limited thereto. The terminal and the server may be directly or indirectly connected in a wired or wireless communication manner. This is not limited in the present disclosure.
Using the servers as an example, for example, the servers may be a server cluster deployed in the cloud, offering AI as a service (AiaaS) to users. A platform splits several common AI services and provides an independent or packaged service in the cloud. This service mode is similar to an AI theme store. All users may access, in a manner of an application programming interface, one or more AI services provided by the AIaaS platform.
For example, one of the AI cloud services may be a data processing service, that is, a data processing program provided in the embodiments of the present disclosure is encapsulated in a server in the cloud. The user invokes a data processing service in the cloud service through terminal so that the server deployed in the cloud invokes an encapsulated data processing program.

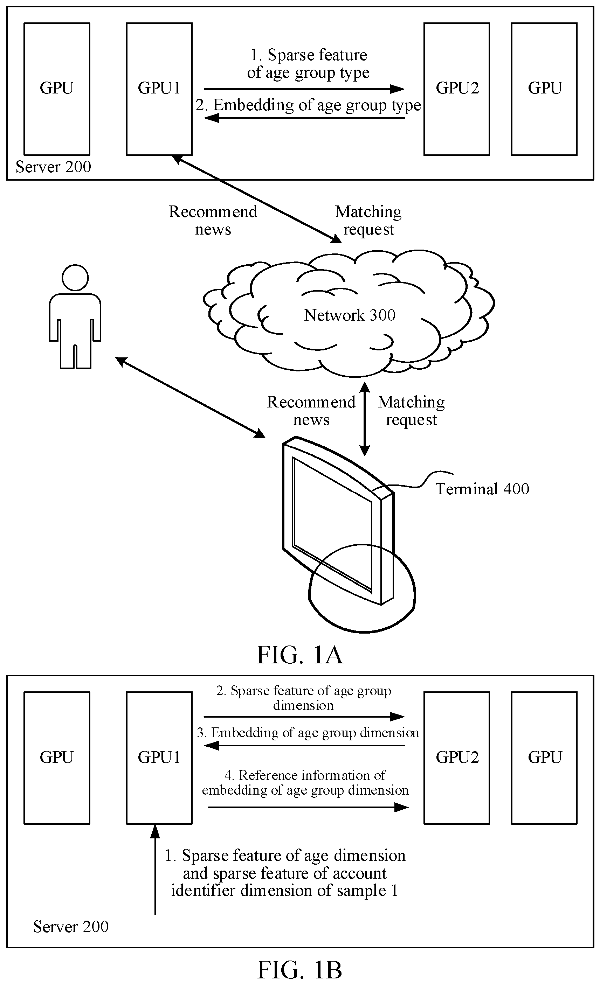

FIG. 1A is a schematic diagram of an application scene of a data processing system according to an embodiment of the present disclosure. A terminal 400 is connected to a server 200 through a network 300. The network 300 may be a wide area network, a local area network, or a combination of the two. Four GPUs are deployed in the server 200. Hereinafter, GPU1 and GPU2 are used as examples for description.
A data sample may be a data sample of a recommendation model. For example, for a news recommendation model, a single data sample may include related object data of an account that logs into a news client. The related object data herein includes an account identifier (account ID), an account age, an attribute label characterizing an account interest, and the like. Embeddings corresponding to sparse features of a first type (for example, an account identifier type) in a full data sample are stored in GPU1 deployed in the server 200, and embeddings corresponding to sparse features of a second type (for example, an age group type) in the full data sample are stored in GPU2 deployed in the server 200.

The terminal 400 transmits a matching request to the server 200. The server 200 invokes a recommendation model. The recommendation model is deployed in any GPU (for example, GPU1), and inputs of the recommendation model are embeddings of the account identifier type and embeddings of the age group type of a target object. Therefore, GPU1 needs to query GPU2 for the embeddings of the age group type of the target object based on sparse features of the age group type. An output of the recommendation model is a recommendation probability that the target object clicks news. When the recommendation probability is greater than a probability threshold, the server 200 returns the news to the terminal 400, and a news client pushes the news to the target object. To improve the recommendation accuracy, processes of updating embeddings of various types are described below.

FIG. 1B is an architecture diagram of a data processing system according to an embodiment of the present disclosure. A server 200 receives a target sample A. The target sample A herein is inputted to GPU1, and GPU1 acquires sparse features of the target sample A. The sparse features of the target sample A contain sparse features of an account identifier type of the target sample A and sparse features of an age group type of the target sample A. GPU1 acquires, from embeddings of full sparse features of the account identifier type, embeddings of the sparse features of the account identifier type of the target sample A. GPU1 acquires, from GPU2, embeddings of the sparse features of the age group type of the target sample A. The embeddings of the sparse features of the age group type of the target sample A are queried by GPU2 from embeddings of full sparse features of the age group type. GPU1 determines the embeddings of the sparse features of the target sample A according to the embeddings of the sparse features of the account identifier type of the target sample A and the embeddings of the sparse features of the age group type of the target sample A. GPU1 performs forward propagation according to the embeddings of the sparse features of the target sample A and transmits an update instruction to GPU2 according to a probability mapping result. The update instruction is configured for instructing GPU2 to update the embeddings of the full sparse features of the age group type.

In some embodiments, the server 200 may be an independent physical server, may be a server cluster or a distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), and a big data and AI platform. The terminal 400 may be a smartphone, a tablet computer, a notebook computer, a desktop computer, a smart speaker, a smart watch, or the like, but is not limited thereto. The terminal and the server may be directly or indirectly connected in a wired or wireless communication manner. This is not limited in the embodiments of the present disclosure.

In some embodiments, the terminal or the server may implement, by running a computer program, the AI-based data processing method provided in the embodiments of the present disclosure. For example, the computer program may be an original program or a software module in an operating system, may be a native application (APP), i.e., a program such as a broadcasting APP or an instant messaging APP that needs to be installed in an operating system to run, may be a mini program, which may be run after being downloaded to a browser environment, or may be a mini program that can be embedded in any APP. In summary, the foregoing computer program may be an APP, a module, or a plug-in in any form.

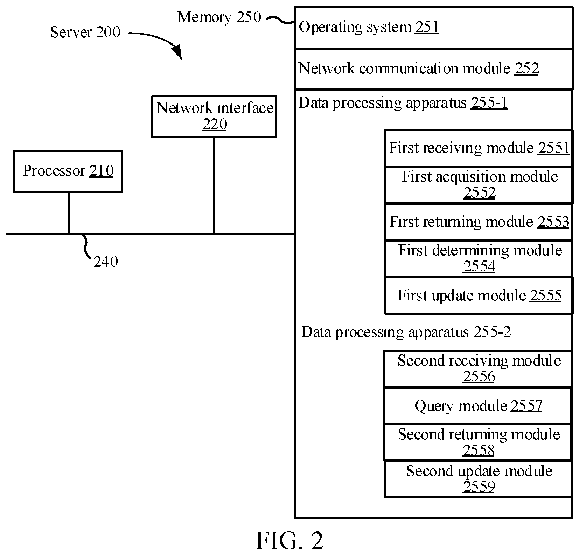

A structure of an electronic device for data processing provided in the embodiments of the present disclosure is described below. FIG. 2 is a schematic structural diagram of an electronic device for data processing according to an embodiment of the present disclosure. An example in which the electronic device is a server 200 is used for description. The server 200 for data processing shown in FIG. 2 includes: at least one processor 210 (the processor 210 may be a GPU or a CPU), a memory 250, and at least one network interface 220. Components in the server 200 are coupled together through a bus system 240. The bus system 240 is configured to implement connection and communication among the components. In addition to a data bus, the bus system 240 further includes a power bus, a control bus, and a state signal bus. However, for clear description, all types of buses in FIG. 2 are marked as the bus system 240.

The processor 210 may be an integrated circuit chip having a signal processing capability, for example, a general purpose processor, a digital signal processor (DSP), or another programmable logic device, discrete gate, transistor logical device, or discrete hardware component. The general purpose processor may be a microprocessor, any conventional processor, or the like.

The memory 250 includes a volatile memory or a non-volatile memory, or may include both the volatile memory and the non-volatile memory. The non-volatile memory may be a read-only memory (ROM). The volatile memory may be a random access memory (RAM). The memory 250 described in this embodiment of the present disclosure is intended to include any suitable type of memories. The memory 250 alternatively includes one or more storage devices physically located away from the processor 210.

In some embodiments, the memory 250 can store data to support various operations. Examples of the data include a program, a module, and a data structure, or their subsets or supersets, which are exemplified below.

An operating system 251 includes a system program configured for processing various basic system services and performing a hardware-related task, such as a framework layer, a core library layer, or a driver layer, to implement various basic services and process the hardware-based task.

A network communication module 252 is configured to reach other electronic devices via one or more (wired or wireless) network interfaces 220. Illustratively, the network interface 220 includes: Bluetooth, wireless fidelity (WiFi), a universal serial bus (USB), and the like.

In some embodiments, the data processing apparatus provided in the embodiments of the present disclosure may be implemented in a software manner, and may be, for example, a data processing plug-in in the terminal described above or a data processing service in the server described above. Certainly, not limited thereto, the data processing apparatus provided in the embodiments of the present disclosure may be provided as various software embodiments, including various forms such as an APP, software, a software module, a script, or code. FIG. 2 shows a data processing apparatus 255-1 stored in the memory 250. The data processing apparatus 255-1 may be software in the form of a program and a plug-in, for example, an image processing plug-in, and includes a series of modules, including a first receiving module 2551, a first acquisition module 2552, a first returning module 2553, a first determining module 2554, and a first update module 2555. FIG. 2 shows a data processing apparatus 255-2 stored in the memory 250. The data processing apparatus 255-2 may be software in the form of a program and a plug-in, for example, an image processing plug-in, and includes a series of modules, including a second receiving module 2556, a search module 2557, a second returning module 2558, and a second update module 2559.

As described above, the data processing method provided in this embodiment of the present disclosure may be implemented by various types of electronic devices. For example, for an electronic device including a plurality of GPUs, a first GPU and a second GPU are deployed in the electronic device (the first GPU and the second GPU may alternatively be deployed in different electronic devices). For an electronic device including a plurality of CPUs, a first CPU and a second CPU are deployed in the electronic device. A computation capability of the GPU is better than that of the CPU.

In some embodiments, the first GPU stores embeddings (that is, embedding features) of full sparse features of a first type, the second GPU stores embeddings (that is, embedding features) of full sparse features of a second type, and the first type is different from the second type. According to the embodiments of the present disclosure, embeddings of full sparse features of a plurality of types may be divided into different GPUs for storage, thereby relieving the storage pressure of each GPU.

As an example, if the type herein is a content type distinguished based on semantics characterized by the sparse features, a field (for example, may be a keyword) of the semantics characterized by the sparse features may be acquired. When the field matches a preset field, a content type corresponding to the preset field is used as the content type of the sparse features. For example, the field of the semantics characterized by the sparse features may be "account", and the preset field may be an account type. In this case, the field herein matches the preset field, and the type of the sparse feature is the account type. The manner of performing distributed storage according to differentiation of content types may help quickly acquire embeddings of sparse features of different content types so that in a recommendation scenario with requirements on feature diversity and richness, embeddings of a corresponding content type may be found more quickly, thereby improving the embedding acquisition efficiency in a training process in a distributed scene.

As an example, the type herein may alternatively be a data format type distinguished based on a data format of the sparse features. The data format type may be a text type, an image type, a voice type, or the like. The manner of performing distributed storage according to differentiation of data format types may help quickly acquire embeddings of sparse features of different data format types so that embeddings of a corresponding data format type may be found more quickly, thereby improving the embedding acquisition efficiency in a training process in a distributed scene.

The types provided in the embodiments of the present disclosure are not limited to the foregoing examples. In a recommendation scene, the sparse features are configured for describing data of a user, and then the type may be an object type obtained by performing division based on different users. For example, 10 sparse features are all configured for describing a user A, and then a type to which the 10 sparse features belong is an object type A. 10 sparse features are all configured for describing a user B, and then a type to which the 10 sparse features belong is an object type B. That is, each user corresponds to an object type. Embeddings of sparse features belonging to the same object type are stored in the same GPU. According to this distributed storage manner, in a recommendation scene, when the target samples participating in training are from different users, all related embeddings of a corresponding user may be found more quickly, thereby improving the embedding acquisition efficiency in the training process in the distributed scene. The type provided in the embodiments of the present disclosure may alternatively be a source type obtained by performing division based on a source of the sparse features. The type provided in the embodiments of the present disclosure may alternatively be a time period type obtained by performing division based on an acquisition time period of the sparse features. Details are not described herein again.

The content type is mainly used as an example for description below. The first GPU and the second GPU store all sparse features of a plurality of content types, with a total of 100 sparse features. For example, the content type herein may be an account type and an age group type. The first type herein may be the account type, and the second type herein may be the age group type. Therefore, the first GPU stores embeddings of full sparse features of an identity type, characterizing that the first GPU stores sparse features of the identity type of all samples. Then, the second GPU stores embeddings of full sparse features of the age group type, characterizing that the second GPU stores sparse features of the age group type of all samples.

In some embodiments, the first GPU and the second GPU belong to a plurality of GPUs, the plurality of GPUs store embeddings of full sparse features of a plurality of types, the first type contains at least one of the plurality of types, and the second type contains at least one of the plurality of types. According to this embodiment of the present disclosure, the embeddings of the full sparse features of the plurality of types may be divided into different GPUs according to types for storage so that queries may be clearly directed without having to be made from all GPUs.

Following the foregoing example, a GPU system includes a plurality of GPUs, for example, includes four GPUs. The first GPU and the second GPU are two GPUs of the four GPUs. 100 embeddings corresponding to 100 sparse features are distributively stored in the four GPUs. The first type herein may be an account type and an interest type, and the second type herein may be an age group type and a gender type. In this case, the first GPU stores embeddings of all sparse features of an identity type and embeddings of all sparse features of the interest type, and the second GPU stores embeddings of all sparse features of the age group type and embeddings of all sparse features of the gender type.

In some embodiments, a storage location of the embeddings of the full sparse features of the first type is different from a storage location of the embeddings of the full sparse features of the second type in a case that a data volume of the embeddings of the full sparse features of the plurality of types is greater than a threshold. According to this embodiment of the present disclosure, distributed storage is performed only in a case that the data volume is greater than the threshold so that the storage resource utilization rate of the GPU may be improved, and excessive load of the storage resource of a single GPU may be avoided. In a case that the data volume of the embeddings of the full sparse features of the plurality of types is not greater than the threshold, the embeddings of the full sparse features of the plurality of types are stored in each of the plurality of GPUs. According to this embodiment of the present disclosure, in a case that the data volume is not greater than the threshold, a single GPU may be adopted to store the embeddings of all sparse features so that each GPU does not need to acquire embeddings from other GPUs in a subsequent training stage, thereby improving the training efficiency.

As an example, the data volume herein may be a total number of embeddings. In a case that the total number of embeddings of the full sparse features of the plurality of types is greater than the threshold, the embeddings of the full sparse features of the first type and the embeddings of the full sparse features of the second type are stored in two GPUs, respectively, in a distributed manner. In a case that the total number of embeddings of the full sparse features of the plurality of types is not greater than the threshold, the embeddings of the full sparse features of the plurality of types, i.e., all embeddings, are stored in the GPUs, that is, each GPU stores a part of the full embeddings.

For example, in an actual service scene, the total number of sparse features is usually large, and the processing required is relatively complex. In this embodiment of the present disclosure, the sparse features are stored using a dynamic embedding data structure of a tfra component. When the number of sparse feature parameters is relatively large, leading to a relatively large number of corresponding embeddings (for example, greater than the threshold) that cannot be accommodated by a video memory of a single GPU card, embeddings corresponding to the sparse features may be divided into video memories of a plurality of GPU cards according to a type division manner for storage. When the total number of sparse features is relatively small, and the total number of corresponding embeddings is relatively small (for example, not greater than the threshold) and may be accommodated by the video memory of a single GPU card, and a part of full embeddings is placed on the video memory of each GPU card in a Replica manner.

As an example, in the field of recommendation systems, embeddings have become a common means for processing sparse features. As a type of "function mapping", an embedding layer maps high-dimensional sparse features to low-dimensional dense vectors. The low-dimensional dense vectors obtained herein are embeddings. The embeddings herein have the same information meaning as the corresponding sparse features, but occupy a smaller storage space and have a lower data type. Then, model end-to-end training is performed. In this embodiment of the present disclosure, a component tfra.dynamic_embedding is used as a storage manner of embeddings. The component stores a plurality of parameters (fullweights) using tf.lookup. MutableHash-Table, i.e., storing embeddings, and may reuse a native optimizer of tensorflow.

As an example, a process of mapping processing for each sparse feature is as follows. A type serial number of the sparse feature is divided by a set value to obtain a corresponding remainder, and the remainder obtained based on the type serial number of the sparse feature is a processor identifier of the sparse feature so that the sparse feature is stored in a GPU indicated by the corresponding processor identifier.

According to the embodiments of the present disclosure, the embeddings (that is, the embedding features) of the sparse features may be stored in corresponding GPUs according to types, and storage resources of the plurality of GPUs may be properly allocated. In addition, compared with the technical solution that each GPU stores embeddings of sparse features of all types, in the present disclosure, each GPU only needs to be responsible for storing and updating allocated embeddings of sparse features of a particular type, thereby reducing storage and update overheads and costs. According to the embodiments of the present disclosure, the embeddings may be flexibly stored, and a balance is reached between a storage resource utilization rate of each GPU and an interaction resource occupation rate between GPUs.

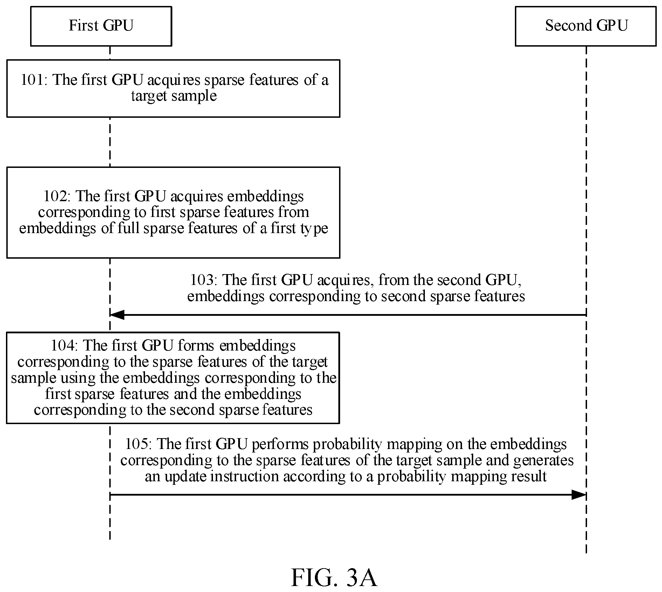

FIG. 3A is a schematic flowchart of an AI-based data processing method according to an embodiment of the present disclosure. Description is provided with reference to operations 101 to 105 shown in FIG. 3A.

Operation 101: A first GPU acquires one or more sparse features of a target sample, the sparse features of the target sample containing one or more first sparse features of a first type and one or more second sparse features of a second type.

As an example, a plurality of GPUs may be deployed in the server. Herein, operation 101 may be implemented by the first GPU, and the server may be a single machine or a server cluster including a plurality of machines. That is, the plurality of GPUs may be deployed in one server, or may be deployed in a plurality of servers.

As an example, during training, the target sample is inputted to the first GPU, and the first GPU acquires the sparse features of the target sample from the target sample, for example, sparse features characterizing an account identifier and sparse feature characterizing an age group. That is, the sparse features of the target sample herein include the first sparse features and the second sparse features. The first sparse features herein are sparse features corresponding to the target sample in the full sparse features of the first type described above. The second sparse features herein are sparse features corresponding to the target sample in the full sparse feature of the second type described above. For example, the target sample is a user A, the first type is an account type, the second type is an age group type, and the full sparse features of the first type are sparse features of the account type of all users. If the number of users is 100, and each user has an account, the full sparse features of the first type are sparse features of the account type of 100 users. The full sparse features of the second type are sparse features of the age group type of all users. If there are 50 age groups in total, the full sparse features of the second type are sparse features of 50 age group types. Herein, the first sparse features are sparse features of the account type (characterizing sparse features of one account) of the user A and sparse features of the age group type (characterizing sparse features of one age group) of the user A.

The embeddings are pre-stored in the first GPU and the second GPU, and the embeddings are obtained by performing embedding compression on the sparse features. Therefore, a process of acquiring sparse features of a plurality of data samples before storage, i.e., a process of acquiring the full sparse features, will be specifically described below.

In some embodiments, a plurality of object accounts that log into a recommending client and object data of the object accounts are acquired, the object data of the plurality of object accounts are used as a plurality of data samples, feature parsing is performed on the object data of the plurality of object accounts to obtain object features of the plurality of object accounts, and the object features of the plurality of object accounts are used as sparse features of the plurality of data samples.

As an example, the recommendation client may be a news client, a video client, a shopping client, or the like. The news client is used as an example for description. The object account is an account that has previously logged into the news client, and the account is held by the user (in the following text, an object will be used uniformly to replace the user). For example, an object A holds an object account A, an object B holds an object account B. Attribute data and operation data of the object account A may be acquired as object data of the object account A. For the object account A, the object data of the object account A may be used as one data sample, and a plurality of data samples may be formed by object data of all objects.

According to this embodiment of the present disclosure, sparse features that accurately describe an object may be acquired so that the embeddings may effectively characterize the object to improve an object characterization capability of the embeddings.

In some embodiments, performing feature parsing on the object data of the plurality of object accounts to obtain object features of the plurality of object accounts described above may be implemented through the following technical solutions: performing the following processing for each object account: acquiring at least one of the following from the object data of the object account: account data corresponding to the object account, biological data corresponding to the object account, location data corresponding to the object account, and interest data of the object account; and performing one-hot encoding on the acquired data, and using an obtained encoding result as an object characteristic of the object account.

As an example, for the object A, the attribute data and the operation data of the object account A may be acquired as the object data of the object account A. An account identifier (for example, an account ID), a biometric identifier (for example, a gender), and a location identifier (for example, a long-term residence) are acquired from the attribute data, and an interest identifier is acquired from the operation data. The operation data may be a browsing operation, a collecting operation, or the like. The interest identifier may be an interest label of operated information. For example, the operated information is sports news, and the interest label may be sports. These identifiers are encoded through one-hot encoding. For example, male is encoded as (0, 1), and female is encoded as (1, 0). An encoding result obtained by one-hot encoding may be used as an object feature. In a storage process, for some objects, even if the objects are different, they have the same gender or the same age. Therefore, for some types of sparse features, the number of sparse features is fixed.

According to this embodiment of the present disclosure, the sparse features that accurately describe the object may be acquired, and the sparse features may comprehensively characterize the object so that the embeddings may effectively characterize the object to improve the object characterization capability of the embeddings.

In some embodiments, before operation 101 is performed, a historical target sample previously acquired by the first GPU from a plurality of data samples is acquired. Data samples except the historical target sample in the plurality of data samples are used as other data samples. At least one data sample is randomly acquired from the other data samples as the target sample.

For example, to continuously improve an expression capability of the embeddings, a GPU system including GPUs performs training for a plurality of times. Each training process may be performed for a plurality of data samples, or may be performed for some of the plurality of data samples. This is not limited. However, to improve the training efficiency, embodiments of the present disclosure provide a plurality of GPUs so that each GPU may share some data samples. For example, this training process involves 10 data samples, and the 10 data samples may be the plurality of data samples, or may be some of the plurality of data samples. A first GPU A receives two data samples of the 10 data samples. For each training process, data samples (historical target sample) received by the first GPU in a previous training process are acquired. The acquisition process may be performed by the first GPU. For example, the data samples received in the previous training process are a data sample A and a data sample B, and in this training process, any number of data samples except the data sample A and the data sample B are randomly acquired from the plurality of data samples, two data samples may be acquired, or another number of data samples may be acquired.

According to this embodiment of the present disclosure, the situation in which a single GPU repeatedly processes the same data sample during a plurality of training processes may be avoided, thereby improving the training efficiency of a single GPU.

In some embodiments, before operation 101 is performed, the plurality of data samples are averagely grouped based on the number of GPUs to obtain a plurality of sample sets. Each sample set includes at least one data sample, and the number of sample sets is the same as the number of GPUs. One-to-one correspondences among the plurality of sample sets and the plurality of GPUs are determined. A data sample in a sample set having the correspondence with the first GPU is used as the target sample corresponding to the first GPU. According to this embodiment of the present disclosure, load balancing of each GPU may be ensured by average grouping. According to this embodiment of the present disclosure, the situation in which a single GPU repeatedly processes the same data sample during a plurality of training processes may be avoided, thereby optimizing the training effect.

As an example, in addition to avoiding, according to the foregoing idea, that a single GPU repeatedly processes the same data sample during a plurality of training processes, load balancing of each GPU may be ensured by average grouping. For example, the plurality of data samples include 10 data samples, and the GPU system includes 5 GPUs. 5 sample sets may be obtained by average grouping, and each sample set includes two data samples. A correspondence between a sample set and a GPU may be pre-stored and directly determined by acquisition. In addition, a matching degree between the sample set and the GPU may further be determined, and a matching degree between each GPU and each sample set is determined in sequence according to any order. For example, for the first GPU A, matching degrees among the first GPU A and the sample sets are determined, and a sample set corresponding to the highest matching degree is used as a sample set having a correspondence with the GPU. A matching degree is negatively correlated to a repetition degree between the sample set and historical target sample data of the first GPU.

Operation 102: The first GPU acquires one or more embeddings corresponding to the first sparse features from the embeddings of the full sparse features of the first type.

As an example, the first GPU acquire, from the embedding of the full sparse features of the first type, the embeddings of the first sparse features of the first type of the target sample.

As an example, the full characterization encompasses all meanings. Each sparse feature corresponds to one embedding, which is equivalent to that embeddings of sparse features of the first type of all samples (including the target sample) are stored in the first GPU. Therefore, the operation herein is equivalent to querying from the full embeddings. The first GPU queries the embeddings of the first sparse features of the first type of the target sample from the embeddings corresponding to all sparse features of the first type, which is equivalent to querying the embeddings of the first type of the target sample from all embeddings of the first type. According to this embodiment of the present disclosure, the embeddings of the first sparse features of the first type of the target sample may be directly acquired locally, thereby improving the embedding acquisition efficiency.

For example, the first type is an account identifier type. The full characterization herein encompasses all meanings. The first GPU stores embeddings corresponding to all sparse features belonging to the account identifier type. For example, the first GPU stores 100 embeddings corresponding to 100 sparse features of the account type. The first GPU queries embeddings of the target sample from all embeddings belonging to the account identifier type, for example, embeddings of the account identifier type of an object A. Querying is performed according to the sparse features of the target sample. For example, the sparse features of the target sample (object A) are (0, 0, 0, 0, 0, 0, 0, 0, 1, 0, 0, 0), and corresponding embeddings are found from a hash table using the sparse features as a key. For example, the embedding herein may be 9 and is equivalent to a value, and the sparse feature and the embedding are stored in the hash table in the manner of a key value pair.

Operation 103: The first GPU acquires one or more embeddings that correspond to the second sparse features and are queried from the embeddings of the full sparse features of the second type from the second GPU.

As an example, the first GPU acquires the embeddings of the second sparse features of the second type of the target sample from the second GPU, and the embeddings of the second sparse features of the second type of the target sample are queried by the second GPU from the embeddings of the full sparse features of the second type.

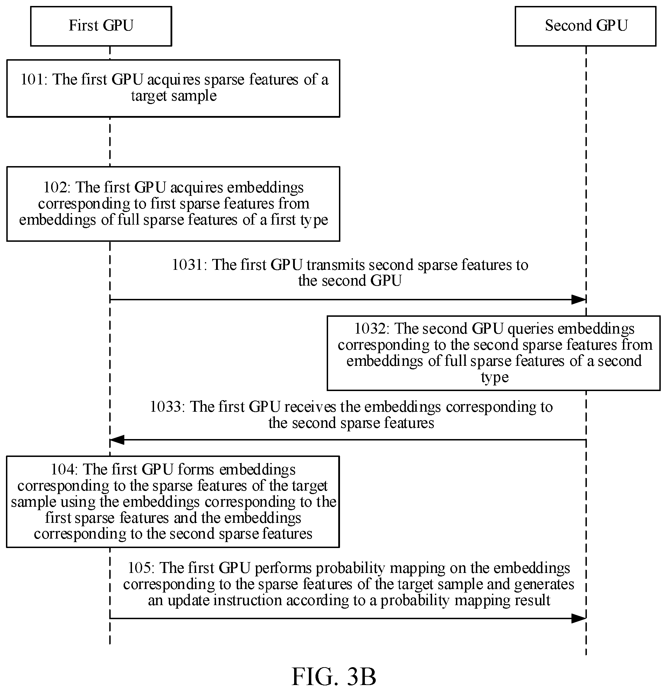

In some embodiments, referring to FIG. 3B, acquiring, by the first GPU, embeddings that correspond to the second sparse features and are queried from the embeddings of the full sparse features of the second type from the second GPU in operation 103 may be implemented through operation 1031 to operation 1033 shown in FIG. 3B.

Operation 1031: The first GPU transmits the second sparse features to the second GPU.

Operation 1032: The second GPU queries the embeddings corresponding to the second sparse features from the embeddings of the full sparse features of the second type.

The full characterization encompasses all meanings. Each sparse feature corresponds to one embedding, which is equivalent to that embeddings of sparse features of the second type of all samples (including the target sample) are stored in the second GPU. Therefore, the operation herein is equivalent to querying from the full embeddings. The second GPU queries the embeddings of the second sparse features corresponding to the target sample from the embeddings corresponding to all sparse features of the second type, which is equivalent to querying the embeddings of the second type of the target sample from all embeddings of the second type.

Operation 1033: The first GPU receives the embeddings corresponding to the second sparse features.

As an example, the first type is the account identifier type, and the second type is the age group type. The first GPU transmits the sparse features of the age group type of the target sample to the second GPU, the second GPU queries embeddings of the age group type of the target sample from all embeddings belonging to the age group type and transmits the embeddings of the age group type of the target sample to the first GPU, and the first GPU receives the embeddings of the age group type of the target sample. According to this embodiment of the present disclosure, the embeddings may be exchanged. For the first GPU, the first GPU may acquire, from the second GPU, embeddings that are not locally stored in the first GPU so that the embeddings may be shared on the premise of distributed storage, thereby improving the utilization rate of the embeddings.

Operation 104: The first GPU generates one or more embeddings corresponding to the sparse features of the target sample using the embeddings corresponding to the first sparse features and the embeddings corresponding to the second sparse features.

As an example, the first GPU forms the embeddings of the sparse features of the target sample using the embeddings of the sparse features of the first type of the target sample and the embeddings of the sparse features of the second type of the target sample. For example, the first GPU forms the embeddings of the sparse features of the target sample using the embeddings of the sparse features of the account identifier type of the target sample and the embeddings of the sparse features of the age group type of the target sample, and uses the embeddings of the sparse features of the target sample as inputs of subsequent model reasoning.

Operation 105: The first GPU performs probability mapping on the embeddings corresponding to the sparse features of the target sample and generates an update instruction according to a probability mapping result, the update instruction being configured for instructing the second GPU to update the embeddings of the full sparse features of the second type.

As an example, the probability mapping refers to mapping of converting an embedding into a probability and may be a linear transformation or a nonlinear transformation. That is, the probability mapping actually is to perform a linear transformation or a nonlinear transformation on an embedding to transform the embedding into a probability value. There are many probability mapping manners. This is not specifically limited in the present disclosure.

As an example, probability mapping for linear transformation may involve a weight parameter (a data form of the weight parameter is a column vector) and an offset parameter (scalar). Point multiplication is performed on the weight parameter and an embedding (a data form of the embedding is a row vector), then a point multiplication result (the point multiplication result herein is a scalar) is added to the offset parameter, and finally, a value obtained through addition is used as a probability (probability mapping result) obtained through mapping. Alternatively, normalization may be performed on the value obtained through addition, and a normalized value is used as the probability mapping result.

As an example, the process of probability mapping may specifically refer to formula (1):

$$h(x) = \frac{1}{1 + \exp(-W^T x + b)} \qquad (1),$$

where x is an embedding, $-W^T$ is a weight parameter, and b is an offset parameter. $-W^T x + b$ may be directly used as a probability obtained by probability mapping, normalization may alternatively be performed on $-W^T x + b$ according to formula (1) to obtain h(x), and h(x) is used as a probability mapping result.

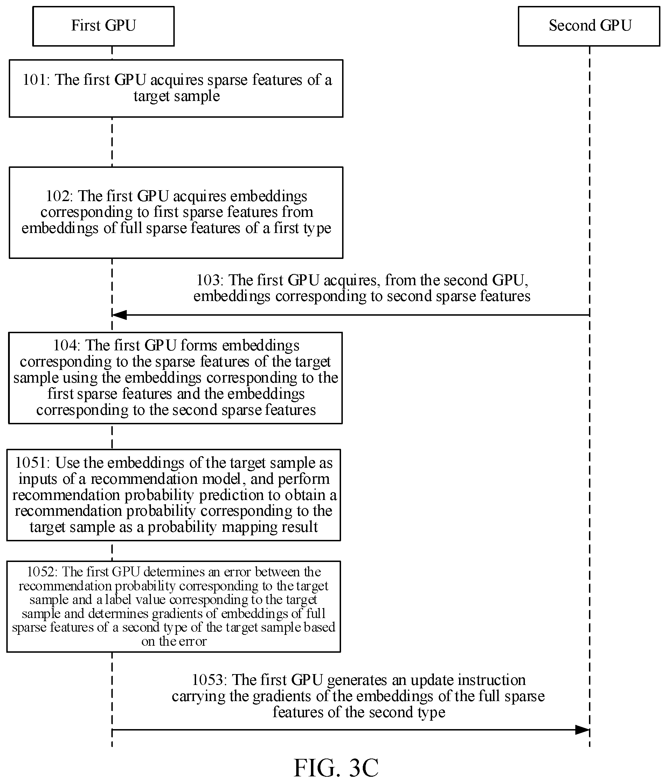

In some embodiments, referring to FIG. 3C, performing, by the first GPU, probability mapping on the embeddings corresponding to the sparse features of the target sample in operation 105 may be implemented by performing operation 1051 shown in FIG. 3C, and generating the update instruction according to the probability mapping result in operation 105 may be implemented by performing operation 1052 to operation 1053 shown in FIG. 3C.

Operation 1051: Use the embeddings corresponding to the sparse features of the target sample as inputs of a recommendation model, and perform probability mapping on the embeddings corresponding to the sparse features of the target sample through the recommendation model to obtain a recommendation probability corresponding to the target sample as the probability mapping result.

As an example, the recommendation model may be a deep neural network (DNN). There may be a plurality of types of embeddings corresponding to any target sample. These types of embeddings form embeddings corresponding to the target sample. The embeddings corresponding to the target sample are used as inputs of the recommendation model. The recommendation model includes at least a fully-connected layer. Probability mapping (which may be a linear transformation or a nonlinear transformation) may be performed on the embeddings corresponding to the target sample through the fully-connected layer to obtain a recommendation probability of each target sample.

Operation 1052: The first GPU determines an error between the recommendation probability corresponding to the target sample and a label value corresponding to the target sample and determines gradients of embeddings of full sparse features of the second type of the target sample based on the error.

As an example, the error herein is obtained by substituting the recommendation probability and the label value into a loss function. The gradients of the embeddings of the full sparse features of the second type of the target sample are computed through the error. Computation methods include, but are not limited to, the following several methods: a numerical computation (computation is performed through function derivation), and an analytic computation method.

Operation 1053: The first GPU generates the update instruction carrying the gradients of the embeddings of the full sparse features of the second type.

As an example, an update instruction that does not carry any information is first generated herein and is configured for instructing the second GPU to update the embeddings of the full sparse features of the second type. Since updating needs to be performed based on the gradients of the embeddings of the full sparse features of the second type, the gradients of the embeddings of the full sparse features of the second type are added to the foregoing update instruction that does not carry any information.

As an example, the first GPU transmits the update instruction to the second GPU, and the second GPU updates the embeddings of the full sparse features of the second type based on the gradients of the embeddings of the full sparse features of the second type.

According to this embodiment of the present disclosure, the second GPU may update the locally stored embeddings, which is equivalent to updating the embeddings in distributed storage. Therefore, a barrier of information isolation caused by distributed storage is broken, and the training process is also split to different GPUs to complete in a distributed manner, which may effectively improve the training efficiency.

In some embodiments, the first GPU updates the embeddings of the full sparse features of the first type according to the probability mapping result. Specifically, the probability mapping result is the recommendation probability. The first GPU determines the error between the recommendation probability and the label value, determines the gradients of the embeddings of the full sparse features of the first type based on the error, and then updates the embeddings of the full sparse features of the first type according to the gradients of the embeddings of the full sparse features of the first type. According to this embodiment of the present disclosure, the first GPU may update the locally stored embeddings. Since the probability mapping result herein is obtained by the first GPU, the first GPU may directly update the locally stored embeddings based on the probability mapping result, thereby improving the training efficiency.

As an example, TensorFlow provides a declarative programming interface. Details of derivation do not need to be concerned about. Only a model needs to be defined to obtain a loss equation, and then various optimizers (Op) implemented by TensorFlow are adopted to perform operations to obtain new embeddings. On the Python code level of TensorFlow, automatic derivation is performed based on various Ops. The method of Tensor-Flow is that each Op includes a gradient computation formula of the Op during image creation. A backward computation diagram is automatically created while creating a forward computation diagram. Inputs and outputs obtained through forward computation are reserved, and then deleted until backward computation is completed. Then, an Op (for example, GradientDescentOptimizer or AdamOptimizer) is finally added. Ops inherit from the Optimizer class, which has many methods. Several important methods are minimize, compute_gradients, apply_gradients, and a slot series. Specifically, how a gradient is updated to a variable is implemented using four methods: _apply_dense, _resource_apply_dense, _apply_sparse, and _resource_apply_spars.

In some embodiments, the data processing method provided in the embodiments of the present disclosure is applied to a second GPU. A first GPU stores embeddings of full sparse features of a first type, the second GPU stores embeddings of full sparse features of a second type, and the first type is different from the second type.

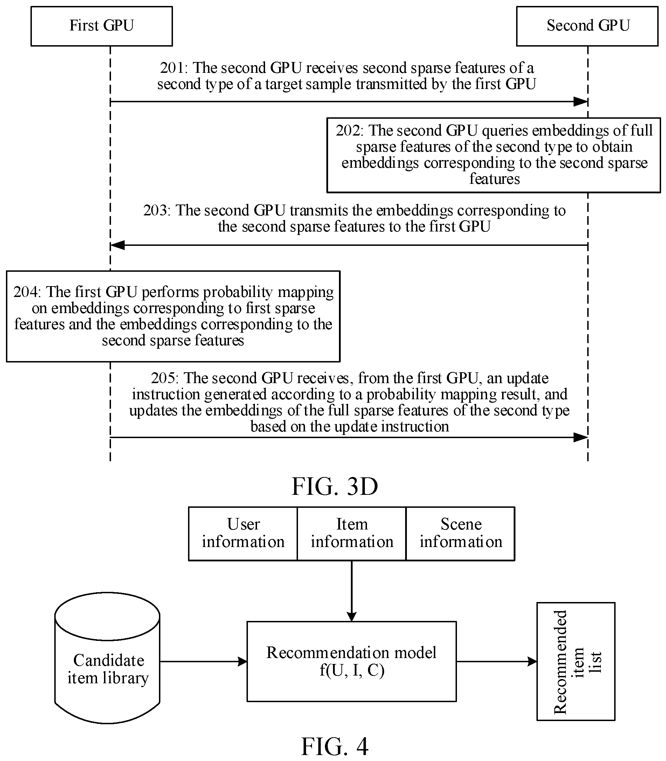

FIG. 3D is a schematic flowchart of a data processing method according to an embodiment of the present disclosure.

Operation 201: The second GPU receives one or more second sparse features of the second type transmitted by the first GPU.

The second GPU receives one or more second sparse features of the second type of a target sample transmitted by the first GPU.

Operation 202: The second GPU queries one or more embeddings of full sparse features of the second type to obtain embeddings corresponding to the second sparse features.

Operation 203: The second GPU transmits the embeddings corresponding to the second sparse features to the first GPU.

Operation 204: The first GPU performs probability mapping on embeddings corresponding to the first sparse features and the embeddings corresponding to the second sparse features.

As an example, the embeddings corresponding to the first sparse features are obtained by the first GPU from the embeddings of the full sparse features of the first type according to the first sparse features of the first type of the target sample.

As an example, embeddings corresponding to sparse features of the target sample is formed using the embeddings corresponding to the first sparse features and the embeddings corresponding to the second sparse features, and probability mapping is performed on the embeddings corresponding to the sparse features of the target sample to obtain a probability mapping result.

Operation 205: The second GPU receives, from the first GPU, an update instruction generated according to the probability mapping result, and updates the embeddings of the full sparse features of the second type based on the update instruction.

In some embodiments, the first GPU and the second GPU belong to a plurality of GPUs, the plurality of GPUs store embeddings of full sparse features of a plurality of types, the first type contains at least one of the plurality of types, and the second type contains at least one of the plurality of types.

In some embodiments, a storage location of the embeddings of the full sparse features of the first type is separated from a storage location of the embeddings of the full sparse features of the second type in a case that a data volume of the embeddings of the full sparse features of the plurality of types is greater than a threshold.

In some embodiments, in a case that the data volume of the embeddings of the full sparse features of the plurality of types is not greater than the threshold, the embeddings of the full sparse features of the plurality of types are stored in each of the plurality of GPUs.

The embeddings are stored in different GPUs according to types so that distributed storage of the embeddings may be implemented. The first GPU acquires different types of sparse features of the target sample. The first GPU locally acquires the embeddings of the first type and acquires the embeddings of the second type from the second GPU. The first GPU performs classification according to types to conveniently acquire the embeddings from corresponding GPUs, which may improve the acquisition efficiency and facilitate feature management. The first GPU performs probability mapping on the two types of embeddings and transmits the update instruction to the second GPU according to the probability mapping result. The update instruction is configured for instructing the second GPU to update the embeddings of the second type, thereby updating the embeddings on the premise of distributed storage, fully using the computation efficiency of the GPU, and greatly improving an embedding update speed while satisfying storage requirements.

Exemplary application of this embodiment of the present disclosure in an actual application scene will be described below.

In some embodiments, to enable a news client to provide a news recommendation meeting the interest of the user to the user, a news recommendation model (recommendation model for short below) needs to be trained and deployed. An input of the recommendation model is an embedding of a target object, and an output of the recommendation model is a probability of clicking a piece of news by the target object. When the probability is greater than a probability threshold, the news client pushes the news to the target object. In the foregoing process, the embeddings are obtained by mapping sparse features such as an account ID. Therefore, the characterization capability of embedding features for sparse features greatly affects the recommendation accuracy. Thus, the embeddings need to be updated so that the embeddings have an excellent expression capability.

An update process of the embeddings is described below. A data sample may be a data sample of a recommendation model. For example, for a news recommendation model, a single data sample may include related object data of an account that logs into a news client. The related object data herein includes an account identifier (account ID), an account age, an attribute label characterizing an account interest, and the like. Embeddings corresponding to sparse features of a first type in a full data sample are stored in GPU1 deployed in the server 200, and embeddings corresponding to sparse features of a second type in the full data sample are stored in GPU2 deployed in the server 200.

A server 200 receives a target sample A. The target sample A herein is inputted to GPU1, and GPU1 acquires sparse features of the target sample A. The sparse features of the target sample A contain sparse features of an account identifier type of the target sample A and sparse features of an age group type of the target sample A. GPU1 acquires, from embeddings of full sparse features of the account identifier type, embeddings of the sparse features of the account identifier type of the target sample A. GPU1 acquires, from GPU2, embeddings of the sparse features of the age group type of the target sample A. The embeddings of the sparse features of the age group type of the target sample A are queried by GPU2 from embeddings of full sparse features of the age group type. GPU1 determines the embeddings of the sparse features of the target sample A according to the embeddings of the sparse features of the account identifier type of the target sample A and the embeddings of the sparse features of the age group type of the target sample A. GPU1 performs forward propagation according to the embeddings of the sparse features of the target sample A and transmits an update instruction to GPU2 according to a probability mapping result. The update instruction is configured for instructing GPU2 to update the embeddings of the full sparse features of the age group type.

A recommendation system may help the user to select satisfactory commodities, interesting news, most suitable courses, short videos meeting interests of the user, and music meeting requirements of the user. Referring to FIG. 4, based on learning "user information", "item information", and "scene information", problems to be processed by the recommendation system may be formally defined as follows. For a user U, in a particular scene C, for massive item information, a function f (U, I, C) is constructed, a preference degree of the user for a particular candidate item I is predicted, and then all candidate items are sorted according to the preference degrees to generate a recommendation list.

When training is performed in the manner of a parameter server, embeddings in a recommendation scene are stored in the CPU, and the embedding update is also completed in the CPU. Performing a large complex calculation operation on an embedding layer by the CPU not only limits the training speed but also prevents the use of a complex model in actual production. This is because using the complex model may cause the CPU to take too long time to compute the given input, resulting in an inability to respond to requests in time. GPU training has achieved great success in application such as image identification and word processing. GPU training greatly improves the speed of training the DNN with its unique efficiency advantage in mathematical operations such as convolution. However, in the recommendation scene, due to a large number of sparse samples (for example, user IDs), each user ID needs to be mapped to a corresponding embedding vector before being inputted into the recommendation model. Thus, a complete recommendation model is usually so large that storage by a single GPU cannot be performed. In the related art, to perform computation using a high-throughput electronic device, an embedding scale is limited by a storage capacity (for example, a video memory of the GPU) of an electronic device, resulting in that forming large-scale embeddings is difficult. Alternatively, to accommodate large-scale embeddings (for example, TB level), CPU-based training has to be used, and a performance advantage of a data parallel training mode cannot be exerted.

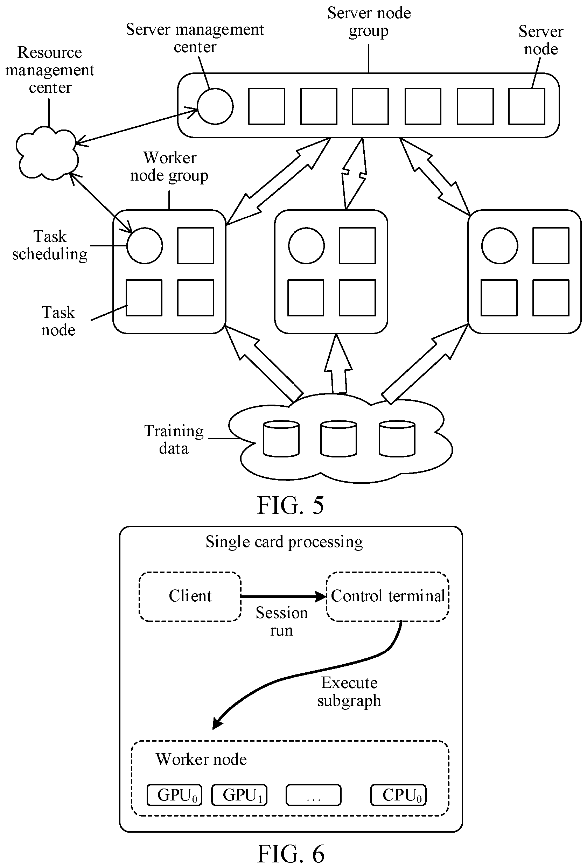

For characteristics of recommendation system engineering, a distributed extensible parameter server solution is proposed, almost perfectly resolving a problem of distributed training of a machine learning model. The parameter server is not only directly applied to a machine learning platform, but also integrated in mainstream deep learning frameworks such as TensorFlow and MXNet, as an important solution for distributed training of machine learning. Referring to FIG. 5, the parameter server includes server nodes and worker nodes. Main functions of the server node are to store a model parameter, accept a local gradient computed by the worker node, summarize and compute a global gradient, and update a model parameter. Main functions of the worker node are to store some training data, pull a latest model parameter from the server node, compute a local gradient according to the training data, and upload the local gradient to the server node. Referring to FIG. 6, single-machine training of TensorFlow is performed on a single worker node, and parallel computing is performed inside the worker node between different GPU and CPU nodes in the manner of a task relationship diagram.

Large-scale embeddings are described below. A function of an embedding layer in a deep learning network is to convert a sparse input vector into a dense vector, but the existence of the embedding layer usually slows down a convergence speed of the entire neural network. The number of parameters of the embedding layer is huge. Assuming that a dimension of an input layer is 100,000, an output dimension of the embedding layer is 32, five 32-dimensional fully-connected layers are added, and a final dimension of an output layer is 10, the number of parameters from the input layer to the embedding layer is 3,200,000, a total number of parameters of all remaining layers is 4,416, and a total weight ratio of the embedding layer is 99.86%, that is, the weight of the embedding layer accounts for most of the weight of the entire network. Therefore, in the training process, most of training time and computation overheads are occupied by the embedding layer. Since the input features are excessively sparse, in a stochastic gradient descent process, only weights (embeddings) of the embedding layer that are connected with non-zero features are updated, which further reduces the convergence speed of the embedding layer.

The use of large-scale sparse discrete features leads to a sharp expansion of a data volume of an embedding layer of a deep model, and a recommendation model with a size of several TBs has become popular in major service scenes across the industry. In most cases, since recommendation tasks are highly sensitive to latency, a model structure of a pre-ranking scene is usually relatively "short and wide", a large number of features are inputted and then mapped to embedding vectors, and a depth of a neural network part is relatively low. Therefore, the parsing and embedding of feature sample content account for a relatively high proportion of the overall time consumption. When training is performed in a parameter server manner, embeddings of a recommendation scene are stored in the CPU, and embedding training is also completed on a CPU side. The training speed is limited, and the computation of a high-depth model cannot be supported due to a relatively high proportion of embedding in the overall time consumption. Therefore, a complex model cannot be used in actual production. This is because using the complex model may cause the CPU to take too long time to compute the given input, resulting in an inability to respond to requests in time.

The data processing method provided in the embodiments of the present disclosure supports large-scale embedding GPU training. This embodiment of the present disclosure provides a training solution based on a GPU system. A model of NVIDIA V100 may be selected, a hardware topology of a server includes eight GPUs, and characteristics of hardware are fully considered to take full advantage of the performance. The GPU system mainly includes three core modules: a data module, a computation module, and a communication module. The data module completes logic such as prefetch and dumpfile by depending on a data processing application programming interface (API) of Tensorflow. The computation module is configured to control each GPU to start a TensorFlow training process to perform training. In the communication module, a Horovod process is adopted to perform inter-card communication for distributed training, and one Horovod process is started on each node to execute a corresponding communication task.

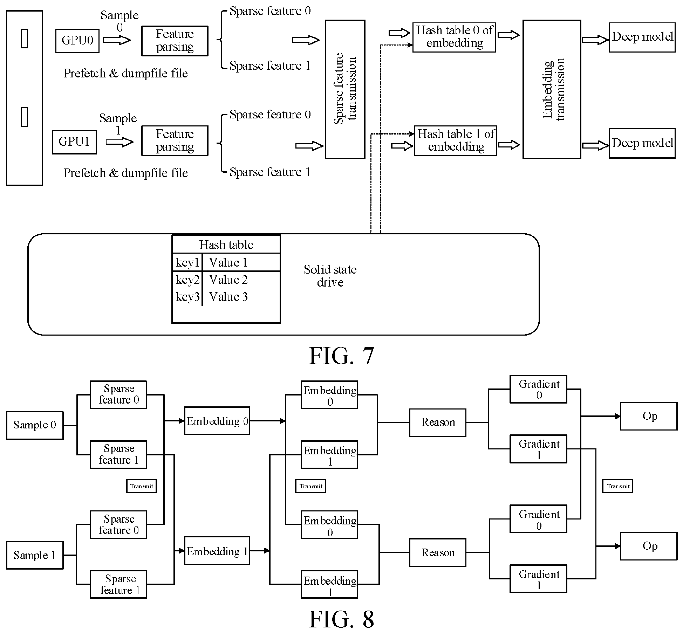

Referring to FIG. 7, GPUO and GPU1 execute processing logic of prefetch and dumpfile through respective input/output (IO) interfaces so that GPUO acquires an inputted sample 0, and GPU1 acquires an inputted sample 1. GPUO performs feature parsing on the sample 0 to obtain a sparse feature 0 of a first type and a sparse feature 1 of a second type. GPU1 performs feature parsing on the sample 1 to obtain a sparse feature 0 of the first type and a sparse feature 1 of the second type. GPUO locally stores sparse features 0 of the first type of all samples, and GPU1 locally stores sparse features 1 of the second type of all samples. Therefore, GPU0 transmits the sparse feature 1 of the second type of the sample 0 to GPU1, and GPU1 transmits the sparse feature 0 of the first type of the sample 1 to GPU0. GPU0 searches a hash table 0 based on the sparse feature 0 of the first type of the sample 0 and the sparse feature 0 of the first type of the sample 1 to obtain an embedding 0 of the first type of the sample 0 and an embedding 0 of the first type of the sample 1. GPU1 searches the hash table 1 based on the sparse feature 1 of the second type of the sample 0 and the sparse feature 1 of the second type of the sample 1 to obtain an embedding 1 of the second type of the sample 0 and an embedding 1 of the second type of the sample 1. The foregoing sparse features are keys, for example, key1, key2, and key3. The embeddings are values, for example, value1, value2, and value3. GPU0 transmits the sparse feature 0 of the first type of the sample 1 to GPU1, and GPU1 transmits the sparse feature 1 of the second type of the sample 0 to GPU0 so that GPU0 performs deep model-based reasoning according to the embedding 0 of the first type of the sample 0 and the embedding 1 of the second type of the sample 0, and GPU1 performs deep model-based reasoning according to the embedding 0 of the first type of the sample 1 and the embedding 1 of the second type of the sample 1.

An entire training process in this embodiment of the present disclosure involves several key parts such as embedding storage, sparse feature processing, embedding segmentation, and inter-card communication.

First, embedding parameter storage is described. In the field of recommendation systems, embeddings have become a common means for processing identity sparse features. As a type of "function mapping", embeddings usually map high-dimensional sparse features to low-dimensional dense vectors, and then perform model end-to-end training. In the TensorFlow framework, data is computed, stored, and transmitted using a dense Tensor as a basic data unit. TensorFlow also provides a static embedding mechanism based on a dense Tensor. A Tensorshape configured for storing embeddings is fixed as [vocabulary_size, embedding_dimension], and vocabulary_size is usually determined by an identity space. In this embodiment of the present disclosure, a component tfra.dynamic_embedding is used as an embedding storage manner. The component stores a plurality of parameters (fullweights) using tf.lookup.MutableHashTable, and may reuse a native optimizer of tensorflow.

Sparse feature processing and embedding segmentation are described below. In an actual service scene, the total number of sparse features is usually large, and processing required is relatively complex. In this embodiment of the present disclosure, the sparse features are stored using a dynamic embedding data structure of a tfra component. When the number of sparse feature parameters is relatively large, leading to a relatively large number of corresponding embeddings (for example, greater than the threshold) that cannot be accommodated by a video memory of a single GPU card, embeddings corresponding to the sparse features may be divided into video memories of a plurality of GPU cards according to a type division manner for storage. When the total number of sparse features is relatively small, and the total number of corresponding embeddings is relatively small (for example, not greater than the threshold) and may be accommodated by the video memory of a single GPU card, and a part of full embeddings is placed on the video memory of each GPU card in a Replica manner.

Finally, inter-card communication is described. Due to the large scale of the sparse features (for example, identity features), a hash table is adopted to store the sparse features. Since input sample data of GPUs is different, embedding vectors corresponding to the inputted sparse features may be stored on other GPU cards. In a forward propagation process of training, through AllToAll communication between the GPUs, each card queries an internal hash table for embedding vectors corresponding to the sparse features. Then, through AllToAll communication between the GPUs, feature vectors obtained by the first AllToAll from other GPUs are returned to the original path, and through two AllToAll communications between the GPUs, the sparse features inputted by the sample of each GPU may obtain the corresponding embeddings. In a reverse update process of training, the gradients of the embeddings are returned to other GPUs again through the AllToAll communication between the GPUs. After acquiring the gradient of each GPU, optimization is performed through the Op to complete large-scale embedding optimization.

Referring to FIG. 8, GPU0 performs feature parsing on the sample 0 to obtain a sparse feature 0 of a first type and a sparse feature 1 of a second type. GPU1 performs feature parsing on the sample 1 to obtain a sparse feature 0 of the first type and a sparse feature 1 of the second type. GPU0 locally stores sparse features 0 of the first type of all samples, and GPU1 locally stores sparse features 1 of the second type of all samples. Therefore, GPU0 transmits the sparse feature 1 of the second type of the sample 0 to GPU1, and GPU1 transmits the sparse feature 0 of the first type of the sample 1 to GPU0. GPU0 searches a hash table 0 based on the sparse feature 0 of the first type of the sample 0 and the sparse feature 0 of the first type of the sample 1 to obtain an embedding 0 of the first type of the sample 0 and an embedding 0 of the first type of the sample 1. GPU1 searches the hash table 1 based on the sparse feature 1 of the second type of the sample 0 and the sparse feature 1 of the second type of the sample 1 to obtain an embedding 1 of the second type of the sample 0 and an embedding 1 of the second type of the sample 1. GPU0 transmits the sparse feature 0 of the first type of the sample 1 to GPU1, and GPU1 transmits the sparse feature 1 of the second type of the sample 0 to GPU0 so that GPU0 performs deep model-based reasoning according to the embedding 0 of the first type of the sample 0 and the embedding 1 of the second type of the sample 0 to obtain a probability mapping result. A gradient 0 corresponding to the embedding 0 of the first type and a gradient 1 corresponding to the embedding 1 of the second type are determined based on an error between the probability mapping result and a label value. GPU1 performs deep model-based reasoning according to the embedding 0 of the first type of the sample 1 and the embedding 1 of the second type of the sample 1 to obtain a probability mapping result. A gradient 0 corresponding to the embedding 0 of the first type and a gradient 1 corresponding to the embedding 1 of the second type are determined based on an error between the probability mapping result and a label value. GPU0 transmits the gradient 1 corresponding to the embedding 1 of the second type to GPU1, and the Op of GPU1 updates the embedding 1 of the second type based on the gradient 1 corresponding to the embedding 1 of the second type. GPU1 transmits the gradient 0 corresponding to the embedding 0 of the first type to GPU0, and the Op of GPU0 updates the embedding 0 of the first type based on the gradient 0 corresponding to the embedding 0 of the first type.

In an existing engineering solution of a recommendation system, to perform computation using a high-throughput device, the embedding scale is limited by a storage capacity (for example, the video memory of the GPU) of a device, resulting in that scaling an embedding scale is difficult. Alternatively, to accommodate large-scale embeddings (for example, TB level), CPU-based training has to be used, and a performance advantage of a data parallel training mode cannot be exerted.

This embodiment of the present disclosure provides a GPU training solution that can support large-scale embeddings and has the following advantages. The GPUs are adopted to store the embedding parameters so that the efficiency of GPU training is fully utilized, and a model training speed is greatly improved. Large-scale embedding parameter storage is supported, and when the embedding parameters cannot be stored in the video memory of a single GPU card, embedding splitting storage logic is implemented through efficient GPUNCCL communications. For non-volatile use, a third-party framework, for example, mainstream frameworks such as TensorFlow and Pytorch may be seamlessly connected.

In this embodiment of the present disclosure, relevant data such as user information is involved. When this embodiment of the present disclosure is applied to specific products or technologies, user permission or consent needs to be obtained, and acquisition, use, and processing of relevant data need to comply with relevant laws, regulations, and standards of relevant countries and regions.

The following continues to describe an exemplary structure in which an AI-based data processing apparatus 255-1 provided in this embodiment of the present disclosure is implemented as a software module. The data processing method is applied to a second GPU. A first GPU stores embeddings of full sparse features of a first type, the second GPU stores embeddings of full sparse features of a second type, and the first type is different from the second type. In some embodiments, as shown in FIG. 2, the software module stored in the AI-based data processing apparatus 255-1 of the memory 250 may include: a first receiving module 2551 configured to acquire, by the first GPU, sparse features of a target sample, the sparse features of the target sample containing first sparse features of the first type and second sparse features of the second type; a first acquisition module 2552 configured to acquire, by the first GPU, embeddings that correspond to the second sparse features and are queried from the embeddings of the full sparse features of the second type from the second GPU; a first returning module 2553 configured to acquire, by the first GPU, the embeddings that correspond to the second sparse features and are queried from the embeddings of the full sparse features of the second type from the second GPU; a first determining module 2554 configured to form, by the first GPU, embeddings corresponding to the sparse features of the target sample using the embeddings corresponding to the first sparse features and the embeddings corresponding to the second sparse features; and a first update module 2555 configured to perform, by the first GPU, probability mapping on the embeddings corresponding to the sparse features of the target sample, and generate an update instruction according to a probability mapping result, the update instruction being configured for instructing the second GPU to update the embeddings of the full sparse features of the second type.

In some embodiments, the first update module 2555 is further configured to update, by the first GPU, the embeddings of the full sparse features of the first type according to the probability mapping result.

In some embodiments, the first GPU and the second GPU belong to a plurality of GPUs, the plurality of GPUs store embeddings of full sparse features of a plurality of types, the first type contains at least one of the plurality of types, and the second type contains at least one of the plurality of types.

In some embodiments, a storage location of the embeddings of the full sparse features of the first type is separated from a storage location of the embeddings of the full sparse features of the second type in a case that a data volume of the embeddings of the full sparse features of the plurality of types is greater than a threshold.

In some embodiments, in a case that the data volume of the embeddings of the full sparse features of the plurality of types is not greater than the threshold, the embeddings of the full sparse features of the plurality of types are stored in each of the plurality of GPUs.

In some embodiments, the first returning module 2553 is further configured to: transmit, by the first GPU, the second sparse features to the second GPU so that the second GPU queries the embeddings corresponding to the second sparse features from the embeddings of the full sparse features of the second type; and receive, by the first GPU, the embeddings corresponding to the second sparse features.

In some embodiments, the first returning module 2553 is further configured to: query, by the first GPU, the embeddings corresponding to the first sparse features from the embeddings of the full sparse features of the first type.

In some embodiments, before the first GPU acquires the sparse features of the target sample, the first receiving module 2551 is further configured to acquire a historical target sample previously acquired by the first GPU from a plurality of data samples; use data samples except the historical target sample in the plurality of data samples as other data samples; and randomly acquire at least one data sample from the other data samples as the target sample.

In some embodiments, before the first GPU acquires the sparse features of the target sample, the first receiving module 2551 is further configured to averagely group the plurality of data samples based on the number of GPUs to obtain a plurality of sample sets, each sample set including at least one data sample, and the number of sample sets being the same as the number of GPUs; determine one-to-one correspondences among the plurality of sample sets and the plurality of GPUs; and use a data sample in a sample set having the correspondence with the first GPU as the target sample corresponding to the first GPU.

In some embodiments, the first update module 2555 is configured to use the embeddings corresponding to the sparse features of the target sample as inputs of a recommendation model, and perform probability mapping on the embeddings corresponding to the sparse features of the target sample through the recommendation model to obtain a recommendation probability corresponding to the target sample as the probability mapping result; and determine, by the first GPU, an error between the recommendation probability corresponding to the target sample and a label value corresponding to the target sample, and determine gradients of embeddings of full sparse features of the second type of the target sample based on the error; and generate the update instruction carrying the gradients of the embeddings of the full sparse features of the second type.

The following continues to describe an exemplary structure in which an AI-based data processing apparatus 255-2 provided in this embodiment of the present disclosure is implemented as a software module. The data processing method is applied to the second GPU. The first GPU stores the embeddings of the full sparse features of the first type, the second GPU stores the embeddings of the full sparse features of the second type, and the first type is different from the second type. In some embodiments, as shown in FIG. 2, the software module stored in the AI-based data processing apparatus 255-2 of the memory 250 may include: a second receiving module 2556 configured to receive, by the second GPU, second sparse features of the second type transmitted by the first GPU; a search module 2557 configured to search, by the second GPU, the embeddings of the full sparse features of the second type for embeddings corresponding to the second sparse features; a second returning module 2558 configured to transmit, by the second GPU, the embeddings corresponding to the second sparse features to the first GPU so that the first GPU performs probability mapping on embeddings corresponding to first sparse features of the first type and the embeddings corresponding to the second sparse features, the embeddings corresponding to the first sparse features being acquired by the first GPU from the embeddings of the full sparse features of the first type; and a second update module 2559 configured to receive, by the second GPU, an update instruction generated according to a probability mapping result from the first GPU, and update the embeddings of the full sparse features of the second type based on the update instruction.

The embodiments of the present disclosure provide a GPU, configured to perform the foregoing AI-based data processing method provided in the embodiments of the present disclosure.

The embodiments of the present disclosure provide a computer program product, including a computer-executable instruction. The computer-executable instruction is stored in a computer-readable storage medium. A processor of an electronic device reads the computer-executable instruction from the computer-readable storage medium and executes the computer-executable instruction to cause the electronic device to perform the foregoing AI-based data processing method provided in the embodiments of the present disclosure. The processor may be a GPU or a CPU.

The embodiments of the present disclosure provide a computer-readable storage medium, having a computer-executable instruction stored therein, the computer-executable instruction, when executed by a processor, causing the processor to perform the AI-based data processing method provided in the embodiments of the present disclosure, for example, the AI-based data processing method shown in FIG. 3A to FIG. 3D. The processor may be a GPU or a CPU.

In some embodiments, the computer-readable storage medium may be a memory such as a ferroelectric RAM (FRAM), a ROM, a programmable ROM (PROM), an erasable programmable ROM (EPROM), an electrically erasable programmable ROM (EEPROM), a flash memory, a magnetic surface memory, an optical disk, or a compact disc ROM (CD-ROM). The computer-readable storage medium may include one or any combination of the aforementioned memories.

In some embodiments, the computer-executable instruction may be written in the form of a program, software, a software module, a script, or code in any form of programming language (including compilation or interpretation language, or declarative or procedural language), and the computer-executable instruction may be deployed in any form, including being deployed as an independent program or being deployed as a module, component, subroutine, or another unit suitable for use in a computing environment.

As an example, the computer-executable instruction may, but does not necessarily, correspond to a file in a file system, and may be stored in a part of a file that saves other programs or data, for example, be stored in one or more scripts in a hyper text markup language (HTML) file, stored in a single file that is specially configured for a program in discussion, or stored in a plurality of collaborative files (for example, files storing one or more modules, subprograms, or code parts).

As an example, the computer-executable instruction may be deployed to be executed on one electronic device, on a plurality of electronic devices located at one site, or on a plurality of electronic devices distributed at a plurality of locations and connected by a communication network.

In summary, the embeddings are stored in different GPUs according to types so that distributed storage of the embeddings may be implemented. The first GPU acquires different types of sparse features of the target sample. The first GPU locally acquires the embeddings of the first type and acquires the embeddings of the second type from the second GPU. The first GPU performs classification according to types to conveniently acquire the embeddings from corresponding GPUs, which may improve the acquisition efficiency and facilitate feature management. The first GPU performs probability mapping on the two types of embeddings and transmits the update instruction to the second GPU according to the probability mapping result. The update instruction is configured for instructing the second GPU to update the embeddings of the second type, thereby updating the embeddings on the premise of distributed storage, fully using the computation efficiency of the GPU, and greatly improving an embedding update speed while satisfying storage requirements.

The foregoing descriptions are only examples of the present disclosure and are not intended to limit the protection scope of the present disclosure. Any modification, equivalent replacement, and improvement made within the spirit and scope of the present disclosure fall within the protection scope of the present disclosure.

## Claims

1. A data processing method, executable by a first graphics processing unit (GPU), the first GPU being configured to store embedding features of full sparse features of a first type, a second GPU being configured to store embedding features of full sparse features of a second type different from the first type, the method comprising:

   acquiring a sparse feature of a target sample, the sparse feature of the target sample containing a first sparse feature of the first type and a second sparse feature of the second type;
   acquiring an embedding feature corresponding to the first sparse feature from the embedding features of the full sparse features of the first type;
   acquiring an embedding feature corresponding to the second sparse feature by querying from the embedding features of the full sparse features of the second type;
   generating an embedding feature corresponding to the sparse feature of the target sample which contains the embedding feature corresponding to the first sparse feature and the embedding feature corresponding to the second sparse feature; and
   performing probability mapping on the embedding feature corresponding to the sparse feature of the target sample, and generating an update instruction according to a probability mapping result, the update instruction instructing the second GPU to update the embedding features of the full sparse features of the second type.

2. The method according to claim 1, further comprising: updating, by the first GPU, the embedding features of the full sparse features of the first type according to the probability mapping result.

3. The method according to claim 1 or 2, wherein the first GPU and the second GPU belong to a plurality of GPUs, the plurality of GPUs are configured to store embedding features of full sparse features of a plurality of types, the first type contains at least one of the plurality of types, and the second type contains at least one of the plurality of types.

4. The method according to claim 3, wherein the embedding features of the full sparse features of the first type are stored separately from the embedding features of the full sparse features of the second type in a case that a data volume of the embedding features of the full sparse features of the plurality of types is greater than a threshold.

5. The method according to claim 3, wherein in a case that a data volume of the embedding features of the full sparse features of the plurality of types is not greater than a threshold, the embedding features of the full sparse features of the plurality of types are stored in each of the plurality of GPUs.

6. The method according to any one of claims 1 to 5, wherein the acquiring the embedding feature corresponding to the second sparse feature from the embedding features of the full sparse features of the second type comprises:

   transmitting the second sparse feature to the second GPU to enable the second GPU to query the embedding feature corresponding to the second sparse feature from the embedding features of the full sparse features of the second type; and
   receiving, by the first GPU, the embedding feature corresponding to the second sparse feature.

7. The method according to any one of claims 1 to 6, wherein the acquiring the embedding feature corresponding to the first sparse feature from the embedding features of the full sparse features of the first type comprises:
   querying, by the first GPU, the embedding feature corresponding to the first sparse feature from the embedding features of the full sparse features of the first type.

8. The method according to any one of claims 1 to 7, further comprising: before the acquiring a sparse feature of a target sample,

   acquiring a historical target sample previously acquired by the first GPU from a plurality of data samples;
   taking a data sample except the historical target sample in the plurality of data samples as other data sample; and
   randomly acquiring at least one data sample from the other data sample as the target sample.

9. The method according to any one of claims 1 to 8, further comprising: before the acquiring a sparse feature of a target sample,

   averagely grouping the plurality of data samples based on the number of GPUs to obtain a plurality of sample sets, each sample set comprising at least one data sample, and the number of sample sets being the same as the number of GPUs;
   determining one-to-one correspondences between the plurality of sample sets and the plurality of GPUs; and

using a data sample in a sample set having the correspondence with the first GPU as the target sample corresponding to the first GPU.

10. The method according to any one of claims 1 to 9, wherein
the performing, by the first GPU, probability mapping on the embedding feature corresponding to the sparse feature of the target sample comprises:

performing probability mapping on the embedding feature corresponding to the sparse feature of the target sample through a recommendation model by taking the embedding feature corresponding to the sparse feature of the target sample as an input of the recommendation model, to obtain a recommendation probability corresponding to the target sample as a probability mapping result; and
the generating an update instruction according to a probability mapping result comprises:

determining an error between the recommendation probability corresponding to the target sample and a label value corresponding to the target sample, and determining a gradient of the embedding feature of the full sparse feature of the second type of the target sample based on the error; and generating the update instruction carrying the gradient of the embedding feature of the full sparse feature of the second type.

11. A data processing method, executable by a second graphics processing unit (GPU), a first GPU being configured to store embedding features of full sparse features of a first type, the second GPU being configured to store embedding features of full sparse features of a second type different from the second type; and
the method comprising:

receiving a second sparse feature of the second type transmitted by the first GPU;
searching the embedding features of the full sparse features of the second type for an embedding feature corresponding to the second sparse feature;
transmitting the embedding feature corresponding to the second sparse feature to the first GPU so that the first GPU performs probability mapping on an embedding feature corresponding to a first sparse feature and the embedding feature corresponding to the second sparse feature, the embedding feature corresponding to the first sparse feature being acquired by the first GPU from the embedding features of the full sparse features of the first type; and

receiving an update instruction generated according to a probability mapping result from the first GPU, and updating the embedding features of the full sparse features of the second type based on the update instruction.

12. The method according to claim 11, wherein the first GPU and the second GPU belong to a plurality of GPUs, the plurality of GPUs are configured to store embedding features of full sparse features of a plurality of types, the first type contains at least one of the plurality of types, and the second type contains at least one of the plurality of types.

13. The method according to claim 12, wherein the embedding features of the full sparse features of the first type are stored separately from the embedding features of the full sparse features of the second type in a case that a data volume of the embedding features of the full sparse features of the plurality of types is greater than a threshold.

14. The method according to claim 12, wherein in a case that a data volume of the embedding features of the full sparse features of the plurality of types is not greater than a threshold, the embedding features of the full sparse features of the plurality of types are stored in each of the plurality of GPUs.

15. A data processing device, applied to a first graphics processing unit (GPU), the first GPU being configured to store embedding features of full sparse features of a first type, a second GPU being configured to store embedding features of full sparse features of a second type different from the second type, and the device comprising:

a first receiving module configured to acquire a sparse feature of a target sample, the sparse feature of the target sample containing a first sparse feature of the first type and a second sparse feature of the second type;
a first acquisition module configured to acquire an embedding feature that correspond to the first sparse feature from the embedding features of the full sparse features of the first type;
a first returning module configured to acquire an embedding feature that correspond to the second sparse feature from the embedding features of the full sparse features of the second type;
a first determining module configured to generate an embedding feature corresponding to the sparse feature of the target sample which contains the embedding feature corresponding to the first sparse feature and the embedding feature corresponding to the second sparse feature; and
a first update module configured to perform probability mapping on the embedding feature corresponding to the sparse feature of the target sample, and generate an update instruction according to a probability mapping result, the update instruction instructing the second GPU to update the embedding features of the full sparse features of the second type.

16. A data processing device, applied to a second graphics processing unit (GPU), a first GPU being configured to store embedding features of full sparse features of a first type, the second GPU being configured to store embedding features of full sparse features of a second type different from the second type; and
the device comprising:

a second receiving module configured to receive a second sparse feature of the second type transmitted by the first GPU;
a search module configured to search the embedding features of the full sparse features of the second type for an embedding feature corresponding to the second sparse feature;
a second returning module configured to transmit the embedding feature corresponding to the second sparse feature to the first GPU, so that the first GPU performs probability mapping on an embedding feature corresponding to a first sparse feature and the embedding feature corresponding to the second sparse feature, the embedding feature corresponding to the first sparse feature being acquired by the first GPU from the embedding features of the full sparse features of the first type; and
a second update module configured to receive an update instruction generated according to a probability mapping result from the first GPU, and update the embedding features of the full sparse features of the second type based on the update instruction.

17. A graphics processing unit (GPU), configured to perform the data processing method according to any one of claims 1 to 10 or claims 11 to 14.

18. An electronic device, comprising:

a memory configured to store a computer-executable instruction; and
a graphics processing unit (GPU) configured to implement the data processing method according to any one of claims 1 to 10 or claims 11 to 14 when executing the computer-executable instruction stored in the memory.

19. A computer-readable storage medium, having a computer-executable instruction stored therein, and the computer-executable instruction, when executed by a processor, implementing the data processing method according to any one of claims 1 to 10 or claims 11 to 14; and the processor being a central processing unit (CPU) or a graphics processing unit (GPU).

20. A computer program product, comprising a computer-executable instruction, and the computer-executable instruction, when executed by a processor, implementing the data processing method according to any one of claims 1 to 10 or claims 11 to 14; and the processor being a central processing unit (CPU) or a graphics processing unit (GPU).

1. Sparse feature
of age group type

2. Embedding of age group type

GPU  GPU1  GPU2  GPU

Server 200

Recommend news

Matching request

Network 300

Recommend news

Matching request

Terminal 400

FIG. 1A

2. Sparse feature of age group dimension

3. Embedding of age group dimension

4. Reference information of embedding of age group dimension

GPU  GPU1  GPU2  GPU

1. Sparse feature of age dimension and sparse feature of account identifier dimension of sample 1

Server 200

FIG. 1B

Server 200

Memory 250

| Operating system 251 |
| --- |
| Network communication module 252 |

Network interface 220

Processor 210

240

Data processing apparatus 255-1

| First receiving module 2551 |
| --- |
| First acquisition module 2552 |
| First returning module 2553 |
| First determining module 2554 |
| First update module 2555 |

Data processing apparatus 255-2

| Second receiving module 2556 |
| --- |
| Query module 2557 |
| Second returning module 2558 |
| Second update module 2559 |

FIG. 2

| First GPU | Second GPU |
|---|---|

**101:** The first GPU acquires sparse features of a target sample

**102:** The first GPU acquires embeddings corresponding to first sparse features from embeddings of full sparse features of a first type

**103:** The first GPU acquires, from the second GPU, embeddings corresponding to second sparse features

**104:** The first GPU forms embeddings corresponding to the sparse features of the target sample using the embeddings corresponding to the first sparse features and the embeddings corresponding to the second sparse features

**105:** The first GPU performs probability mapping on the embeddings corresponding to the sparse features of the target sample and generates an update instruction according to a probability mapping result

FIG. 3A

```
┌─────────────────────┐                                    ┌─────────────────────┐
│      First GPU      │                                    │     Second GPU      │
└─────────────────────┘                                    └─────────────────────┘
```

┌──────────────────────────────────────────────┐
│ 101: The first GPU acquires sparse features of a │
│                target sample                    │
└──────────────────────────────────────────────┘

┌──────────────────────────────────────────────┐
│ 102: The first GPU acquires embeddings         │
│ corresponding to first sparse features from    │
│ embeddings of full sparse features of a first type │
└──────────────────────────────────────────────┘

1031: The first GPU transmits second sparse features to
the second GPU

┌──────────────────────────────────────────────┐
│ 1032: The second GPU queries embeddings         │
│ corresponding to the second sparse features from │
│ embeddings of full sparse features of a second  │
│                  type                           │
└──────────────────────────────────────────────┘

1033: The first GPU receives the embeddings corresponding to
the second sparse features

┌──────────────────────────────────────────────┐
│ 104: The first GPU forms embeddings             │
│ corresponding to the sparse features of the target │
│ sample using the embeddings corresponding to the │
│ first sparse features and the embeddings         │
│ corresponding to the second sparse features      │
└──────────────────────────────────────────────┘

105: The first GPU performs probability mapping on the embeddings
corresponding to the sparse features of the target sample and generates
an update instruction according to a probability mapping result

FIG. 3B

First GPU

Second GPU

101: The first GPU acquires sparse features of a target sample

102: The first GPU acquires embeddings corresponding to first sparse features from embeddings of full sparse features of a first type

103: The first GPU acquires, from the second GPU, embeddings corresponding to second sparse features

104: The first GPU forms embeddings corresponding to the sparse features of the target sample using the embeddings corresponding to the first sparse features and the embeddings corresponding to the second sparse features

1051: Use the embeddings of the target sample as inputs of a recommendation model, and perform recommendation probability prediction to obtain a recommendation probability corresponding to the target sample as a probability mapping result

1052: The first GPU determines an error between the recommendation probability corresponding to the target sample and a label value corresponding to the target sample and determines gradients of embeddings of full sparse features of a second type of the target sample based on the error

1053: The first GPU generates an update instruction carrying the gradients of the embeddings of the full sparse features of the second type

FIG. 3C

| First GPU | | Second GPU |
|---|---|---|

201: The second GPU receives second sparse features of a second type of a target sample transmitted by the first GPU

202: The second GPU queries embeddings of full sparse features of the second type to obtain embeddings corresponding to the second sparse features

203: The second GPU transmits the embeddings corresponding to the second sparse features to the first GPU

204: The first GPU performs probability mapping on embeddings corresponding to first sparse features and the embeddings corresponding to the second sparse features

205: The second GPU receives, from the first GPU, an update instruction generated according to a probability mapping result, and updates the embeddings of the full sparse features of the second type based on the update instruction

FIG. 3D

| User information | Item information | Scene information |
|---|---|---|

Candidate item library → Recommendation model f(U, I, C) → Recommended item list

FIG. 4

Resource
management
center

Server management
center

Server node
group

Server
node

Worker
node group

Task
scheduling

Task
node

Training
data

FIG. 5

Single card processing

Client

Session
run

Control terminal

Execute
subgraph

Worker node

GPU$_0$  GPU$_1$  ...  CPU$_0$

FIG. 6

FIG. 7

FIG. 8

## INTERNATIONAL SEARCH REPORT

| International application No. |
|---|
| **PCT/CN2023/135891** |

**A.    CLASSIFICATION OF SUBJECT MATTER**

G06F9/54(2006.01)i;  G06F9/50(2006.01)i;  G06N3/098(2023.01)i;  G06N3/0985(2023.01)i

According to International Patent Classification (IPC) or to both national classification and IPC

**B.    FIELDS SEARCHED**

Minimum documentation searched (classification system followed by classification symbols)

IPC:G06F G06N

Documentation searched other than minimum documentation to the extent that such documents are included in the fields searched

Electronic data base consulted during the international search (name of data base and, where practicable, search terms used)

CNKI, DWPI, VEN, CNTXT, CNABS: 稀疏特征, 嵌入特征, 图形处理器, 概率映射, embedded feature, GPU, sparse feature, graphics processor, probability mapping

**C.    DOCUMENTS CONSIDERED TO BE RELEVANT**

| Category* | Citation of document, with indication, where appropriate, of the relevant passages | Relevant to claim No. |
|---|---|---|
| PX | CN 116974781 A (TENCENT TECHNOLOGY (SHENZHEN) CO., LTD.) 31 October 2023 (2023-10-31) <br> description, paragraphs 73 and 125-131, and claims 1-20 | 1-20 |
| A | CN 113971428 A (BEIJING DAJIA INTERCONNECTION INFORMATION TECHNOLOGY CO., LTD.) 25 January 2022 (2022-01-25) <br> description, paragraphs 50-55, and claim 1 | 1-20 |
| A | CN 112884157 A (BEIJING DAJIA INTERCONNECTION INFORMATION TECHNOLOGY CO., LTD.) 01 June 2021 (2021-06-01) <br> entire document | 1-20 |
| A | CN 109919436 A (HUARONG RONGTONG (BEIJING) TECHNOLOGY CO., LTD.) 21 June 2019 (2019-06-21) <br> entire document | 1-20 |
| A | US 2021319078 A1 (MICROSOFT TECHNOLOGY LICENSING, LLC) 14 October 2021 (2021-10-14) <br> entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 February 2024** | **23 February 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/135891**

| Patent document cited in search report | | | Publication date (day/month/year) | Patent family member(s) | | | Publication date (day/month/year) |
|---|---|---|---|---|---|---|---|
| CN | 116974781 | A | 31 October 2023 | None | | | |
| CN | 113971428 | A | 25 January 2022 | None | | | |
| CN | 112884157 | A | 01 June 2021 | None | | | |
| CN | 109919436 | A | 21 June 2019 | None | | | |
| US | 2021319078 | A1 | 14 October 2021 | US | 2023028789 | A1 | 26 January 2023 |
| | | | | WO | 2021211199 | A1 | 21 October 2021 |
| | | | | EP | 4136551 | A1 | 22 February 2023 |
| | | | | CN | 115398423 | A | 25 November 2022 |
| | | | | IN | 202217057399 | A | 04 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310492698